**Europäisches Patentamt**

**European Patent Office**

**Office européen des brevets**

(11) Veröffentlichungsnummer : **0 366 867 B1**

(19)

(12)

# EUROPÄISCHE PATENTSCHRIFT

(45) Veröffentlichungstag der Patentschrift :
**27.05.92 Patentblatt 92/22**

(51) Int. Cl.$^5$ : **A23L 3/00,** A23L 3/36, **H05B 6/80**

(21) Anmeldenummer : **89112738.3**

(22) Anmeldetag : **12.07.89**

(54) **Arbeitsverfahren und Vorrichtung zum gleichmässigen Erwärmen mittels Mikrowellen.**

(30) Priorität : **11.10.88 DE 3834574**

(43) Veröffentlichungstag der Anmeldung :
**09.05.90 Patentblatt 90/19**

(45) Bekanntmachung des Hinweises auf die
Patenterteilung :
**27.05.92 Patentblatt 92/22**

(84) Benannte Vertragsstaaten :
**CH DE FR GB IT LI NL**

(56) Entgegenhaltungen :
**EP-A- 0 286 817**
**EP-A- 0 287 760**

(56) Entgegenhaltungen :
**DE-A- 2 627 588**
**DE-A- 3 447 544**
**FR-A- 2 547 732**
**US-A- 3 665 491**
**US-A- 3 935 415**
**FOOD MANUFACTURE, Band 63, Nr. 5, Mai**
**1988, Seiten 53,55, Woolwich, London, GB;**
**"Microwave Magic"**

(73) Patentinhaber : **HERMANN BERSTORFF**
**Maschinenbau GmbH**
**An der Breiten Wiese 3/5**
**W-3000 Hannover 61 (DE)**

(72) Erfinder : **Koch, Klaus, Dipl.-Phys.**
**Feldstrasse 2**
**W-3014 Laatzen 4 (DE)**

## Beschreibung

Die Erfindung betrifft ein Arbeitsverfahren mit den Merkmalen gemäß dem Oberbegriff von Patentanspruch 1.

Aus der DE-PS 34 32 341 ist eine Vorrichtung zum Pasteurisieren mittels Mikrowellen bekannt. Sie weist eine längliche Mikrowellenbehandlungskammer mit einem durch die Kammer geführten, endlosen Transportband auf. In die Behandlungskammer sind Mikrowelleneinspeisekanäle geführt und Temperaturfühler angeordnet.

Mittels dieser Einrichtung wird in drei aufeinander folgenden Kammern jeweils eine stufenweise Verringerung der einzuspeisenden Mikrowellenenergie vorgenommen. Wenn das zu behandlende Produkt, z.B. ein Fertiggericht, einem Pasteurisierungsvorgang unterworfen werden soll, ist es von großer Bedeutung, eine gleichmäßige Temperatur für alle in der Verpackung sich befindenden Produkte zu erzielen. Es ist sehr schwierig, diese Forderung zu erfüllen, weil die einzelnen Produkte, z.B. unterschiedliche pharmazeutische oder auch Lebensmittelprodukte, für die Erreichung einer gleichmäßigen Temperatur einen unterschiedlichen Wärmebedarf haben.

In der FR-A-2 547 732 wird erwähnt, daß mit flüssigen Produkten gefüllte Behälter so lange einem elektromagnetischen Feld ausgesetzt werden, bis im Inneren der Produkte eine ausreichend hohe Temperatur erreicht ist. Eine derartige Erhitzungsweise bedeutet, daß bei festen zu erhitzenden Produkten die Randbereiche temperaturgeschädigt sind, ehe der Mittelbereich die erforderliche Temperatur erreicht hat. Hervorzuheben ist, daß gemäß dieser Entgegenhaltung nur ein Produkt in einem Behälter ist und es sich darüber hinaus um ein flüssiges Produkt handelt. Das Aufwärmen einer Flüssigkeit in einem Behälter geschieht von der Unterseite des Behälters her, da durch die intensive Konvektionsbewegung sich die erwärmte Flüssigkeit von allein nach oben bewegt. Wenn gemäß dieser Entgegenhaltung mittels Mikrowellen von oben auf die Flüssigkeit eingewirkt wird, erfolgt keine thermische Bewegung, so daß die obere Partie bereits zum Kochen neigt, während die untere noch kalt ist. Auch genügt es nicht, durch Ausdehnung der Behandlungszeit die Temperatur im Inneren auf die gewünschte Mindesttemperatur zu bringen. Nach Anspruch 8 wird die Behandlung während einer vorher festgelegten Zeit aufrecht erhalten.

Ein Pasteurisierverfahren, was mit einer vorher festgelegten Behandlungszeit arbeitet, ist nicht in der Lage einzelne unterschiedliche Produkte, die sich in einer Verpackung befinden, exakt auf eine Temperatur zu erhitzen. Die Konsistenz von Fleisch oder Gemüse ist stark unterschiedlich, so daß auch die Leistungsaufnahme zwecks Erreichung einer bestimmten Temperatur sehr unterschiedlich ist.

Gemäß DE-A-2 627 588 wird die Anfangstemperatur eines Produkts in einer Packung gemessen. Die Mitteltemperatur wird in Form eines elektronischen Signals gespeichert. Danach erfolgt eine entsprechende Leistungsauskoppelung, um eine Endtemperatur zu erreichen.

Wenn ein derartiges Verfahren angewandt wird, um ein verschiedene Produkte aufweisendes Fertiggericht zu pasteurisieren, müssen Nachteile in Kauf genommen werden, weil die Mitteltemperatur nur für ein Produkt bestimmt wird, während die übrigen Produkte in der Packung entweder verbrannt sind oder nicht annähernd auf die Pasteurisiertemperatur gebracht wurden.

In der US-PS 3,665,491 wird eine Anlage gezeigt, mit unterschiedlich zu temperierenden Zonen, durch welche Packungen mit unterschiedlichen Produkten geführt werden. Eine Steuerung der Leistungsauskopplung entsprechend der jeweiligen Produkttemperaturen wird nicht offenbart.

Bei Verfahren gemäß dem Stand der Technik wurde die Temperatur des Produktes als Maßstab genommen, welches zuerst die Behandlungstemperatur, z.B. die Pasteurisierungstemperatur, erreicht hatte. Die obere Behandlungstemperatur war die höchste, kritische Temperatur, die nicht überschritten werden durfte, um Temperaturschädigungen zu vermeiden. Die übrigen auch in der Verpackung enthaltenen Produkte, z.B. eine Soße, erreichten dadurch überhaupt nicht die Pasteurisierungstemperatur, weil eine weitere Erhöhung der Gesamttemperatur, die für die Pasteurisierung der Soße erforderlich gewesen wäre, zwangsläufig zu einer Schädigung der übrigen Produkte geführt hätte.

Es ist die Aufgabe der Erfindung, ein Verfahren und eine Einrichtung für die Durchführung des Verfahrens aufzuzeigen, um eine sehr gleichmäßige Temperatur der einzelnen zu behandelnden Produkte in einem Behälter oder einer abgeschlossenen Verpackung zu erzielen. Es soll z.B. bei einem verpackten Fertiggericht sowohl das weniger Energie verbrauchende bzw. aufnehmende Gemüse als auch ein Fleischstück in einer Soße sehr schnell auf eine gleichmäßige Temperatur gebracht und danach gehalten werden.

Die Aufgabe wird durch die im kennzeichnenden Teil des Verfahrensanspruchs beschriebenen Merkmale gelöst. Eine für die Durchführung des Verfahrens besonders geeignete Vorrichtung wird in Anspruch 2 offenbart.

Die genaue Position der Verpackungen auf dem Transportband wird vor dem Einlaufen in die Behandlungskammer durch einen, mit einer Reflexionslichtschranke zusammenwirkenden Weggeber ermittelt und an den Rechner gegeben, so daß eine Energieauskopplung durch die Rechnersteuerung der Generatoren durchgeführt werden kann, wenn die Verpackungen auf dem Transportband unterhalb oder auch oberhalb von Mikrowelleneinspeisekanäle laufen.

Durch die Anordnung von Temperatursensoren, die die Temperatur der einzelnen Produkte in der Verpackung ermitteln, kann durch das erfindungsgemäße Arbeitsverfahren auf jedes einzelne Produkt hinsichtlich der Mikrowelleneinspeisung eingegangen werden.

Dem Rechner müssen zu diesem Zweck spezifische Produktparameter für die Steuerung der die Leistungshöhe bestimmenden Generatoren eingegeben werden.

Wenn eine Behandlung zwecks Pasteurisierung eines Fertiggerichtes in der Anlage durchgeführt werden soll, wird zunächst die Temperatur der in Arbeitsrichtung zuerst in der Verpackung sich befindenden Kartoffeln gemessen und an einen Rechner gegeben. Danach erfolgt die Temperaturmessung des als nächstes sich in der Verpackung befindenden Fleischstückes sowie eine Weitergabe an den Rechner. Schließlich wird die Temperatur des danach in Arbeitsrichtung folgenden Gemüseanteils gemessen und weitergegeben.

In dem Rechner wird vorher das Portionsgewicht, die Materialdichte und die dielektrischen Werte der Kartoffeln, des Fleischstückes, der Soße und des Gemüses eingegeben sowie die für alle Produkte gleichmäßige End-Pasteurisiertemperatur.

Der Rechner ermittelt dann die jeweilige Mikrowellenleistungshöhe, die erforderlich ist, um z.B. die Kartoffeln von 43° C auf 80° C, das Fleischstück von 60° C auf 80° C und das Gemüse von 30°C auf 80° C zu erhitzen.

Wenn die Verpackung auf dem laufenden Transportband die Mikrowelleneinspeiseöffnung der Einspeisekanäle passiert, wird exakt die jeweilige Mikrowellenleistungshöhe in das dazu gehörige Produkt eingespeist, um die Endbehandlungstemperatur von 80° C zu erreichen. Die Mikrowellenleistung wird durch die Steuerung des einzelnen Generators durch den Rechner in das zugeordnete Produkt eingegeben, wenn dieses die Einspeiseöffnung des jeweiligen Einspeisekanals passiert.

Danach kann, um bei schwierig zu erwärmenden Produkten eine Kontrolle zu haben, eine erneute berührungslose Temperaturmessung der einzelnen Produkte erfolgen, wenn die Verpackung auf dem Transportband unterhalb oder oberhalb des hinter dem Einspeisekanal angeordneten Temperatursensors vorbeigeführt wird.

Die durch die verrechnete Mikrowellenleistung gestiegenen Temperaturen, die je nach dem zu behandelnden Produkt unterschiedlich schnell steigen, werden erneut abgetastet und an den Rechner gegeben.

Der Rechner ermittelt erneut die Mikrowellenleistungshöhe, die noch bis zur Erreichung der Endbehandlungstemperatur der einzelnen Produkte erforderlich ist und veranlaßt die einzelnen Generatoren, eine entsprechend korrigierte Leistungshöhe in jedes einzelne Produkt einzukoppeln.

Dieser Vorgang wird an jedem Einspeisekanal, dem ein mit dem Rechner verbundener Temperatursensor in Arbeitsrichtung in einem bestimmen Abstand vorgeordnet ist, wiederholt, bis die Endbehandlungstemperatur erreicht ist.

Dann wird je nach Erfordernis noch eine bestimmte Wärmehaltezeit eingehalten und die Verpackung oder auch ein offener Behälter aus der Behandlungskammer herausgefördert.

Nachfolgend werden bevorzugte Ausführungsbeispiele der Erfindung anhand der Zeichnungen erläutert. Es zeigen:

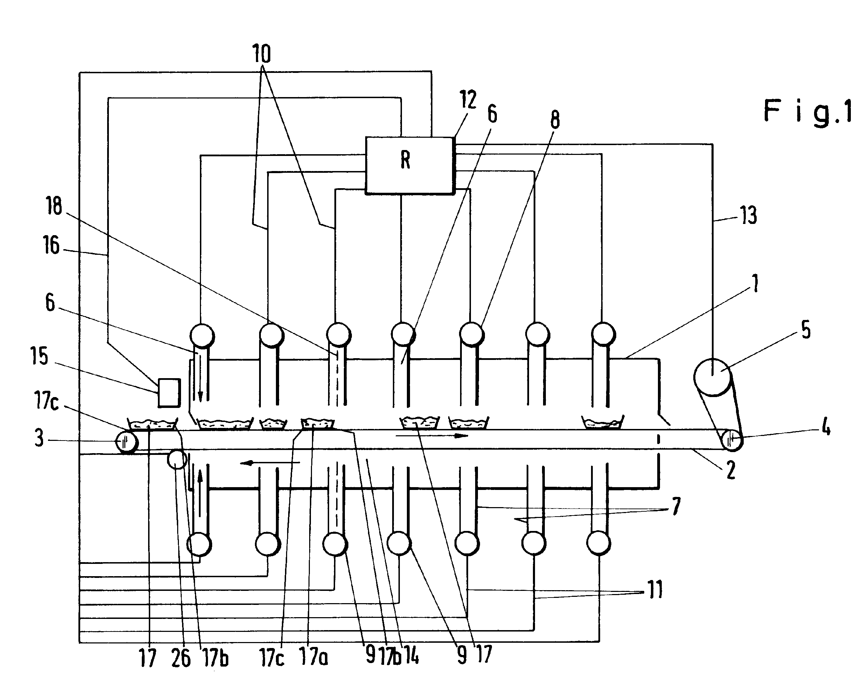

Fig. 1 einen schematisierten Längsschnitt durch eine Mikrowellenanlage.

Fig. 2 zeigt schematisiert den Verlauf der Energieeinspeisung in die einzelnen Produkte.

Fig. 3 eine Darstellung der Temperaturerhöhung einer Packung vor, während und nach der Mikrowellenbehandlung.

Fig. 4 eine Darstellung der einzuspeisenden Leistungshöhe, um auf die Endtemperatur zu gelangen.

Durch die Behandlungskammer 1 wird ein endloses Transportband 2 geführt und um die Rollen 3 und 4 umgelenkt. An der Umlenkrolle 4 ist ein Antrieb 5 angeschlossen.

In die Behandlungskammer münden obere Mikrowelleneinspeisekanäle 6 und untere -kanäle 7 ein, an die jeweils obere Generatoren 8 bzw. untere Generatoren 9 für die Erzeugung der Mikrowellenenergie angeschlossen sind.

Die oberen Generatoren 8 sind mittels der Leitungen 10 und die unteren Generatoren 9 mittels der Leitungen 11 an einen Rechner 12 angeschlossen.

Der Antrieb 5 ist durch eine Leitung 13 mit dem Rechner verbunden.

Zwecks Registrierung der exakten Positionen der Behälter 17 auf dem Transportband 2 wird eine Reflexionslichtschranke 15 vorgesehen, die mittels der Leitung 16 mit dem Rechner 12 und mit einem allgemein bekannten Weggeber 26 verbunden ist.

Nachfolgend wird die Funktionsweise der Mikrowellenanlage erläutert:

Die Position der Packung 17a auf dem Transportband 2, d.h. insbesondere der Anfang 17b und das Ende 17c wird durch die Registriereinrichtung 15 erfaßt und an den Rechner 12 gegeben.

Die Registriereinrichtung ist in diesem Fall eine Reflexionslichtschranke 15, die in Verbindung mit einem an den Rechner 12 angeschlossenen Weggeber 26 arbeitet. Der Weggeber 26 wandelt die Bandbewegung in elektrische Impulse um, die so dimensioniert werden können, daß z.B. ein Impuls pro Millimeter Bandbewegung an den Rechner gegeben wird. Mit dieser Auflösung können die Schaltpunkte zum An- und Abschalten der Mikrowellenleistung bezüglich der Behälterlänge und der Öffnungsmitte 18 millimetergenau definiert werden.

Bei der exakten Registrierung des Anfanges 17b und des Endes 17c errechnet der Rechner 12 die An- und Abschaltpunkte 23 und 24 der Mikrowellenleistung im Verhältnis zur Behälterposition auf dem Band.

Wenn die Packung 17a z.B. unter die Öffnungsmitte des Einspeisekanals 18 hindurchläuft, schaltet der Rechner 12 die Mikrowellenleistung an. Die Einschaltung der Mikrowelleneinspeisung erfolgt aufgrund der Berechnung des von der Packung 17 mit dem Transportband 2 zurückgelegten Weges bis unterhalb der Öffnungsmitte 18 des Einspeisekanals 6a.

Nach Passieren des Ausschaltpunktes 24 unterhalb der Öffnungsmitte 18 wird die Mikrowellenauskoppelung aus Kanal 6a durch den Rechner 12 bei Erreichen des Ausschaltpunktes 24 vor dem Behälterende ausgeschaltet.

Dieser Vorgang wird durchgeführt, ohne daß eine Abtastung des Packungsanfanges 17b oder -endes 17c in der Kammer 1 erfolgen muß. Lediglich durch die Registrierung der Position der Pakkung 17 auf dem Transportband 2 vor dem Eintreten in die Behandlungskammer ermittelt der Rechner jeweils den exakten Zeitpunkt des Beginns und der Beendigung der Mikrowellenauskoppelung für jeden einzelnen Kanal 6, 7 und für jede einzelne Packung und für jedes einzelne Produkt in der Verpakkung. Die nicht veränderbare Anordnung der Einspeisekanäle 6 und deren Abstände zueinander wird bei dem Durchlauf der Pakkungen 17 durch die Behandlungskammer 1 ebenfalls von dem Rechner 12 berücksichtigt.

Gemäß der Erfindung wird jeweils durch die Temperatursensoren, z.B. Infrarotsensoren, die Temperatur der einzelnen Produkte in den Packungen gemessen.

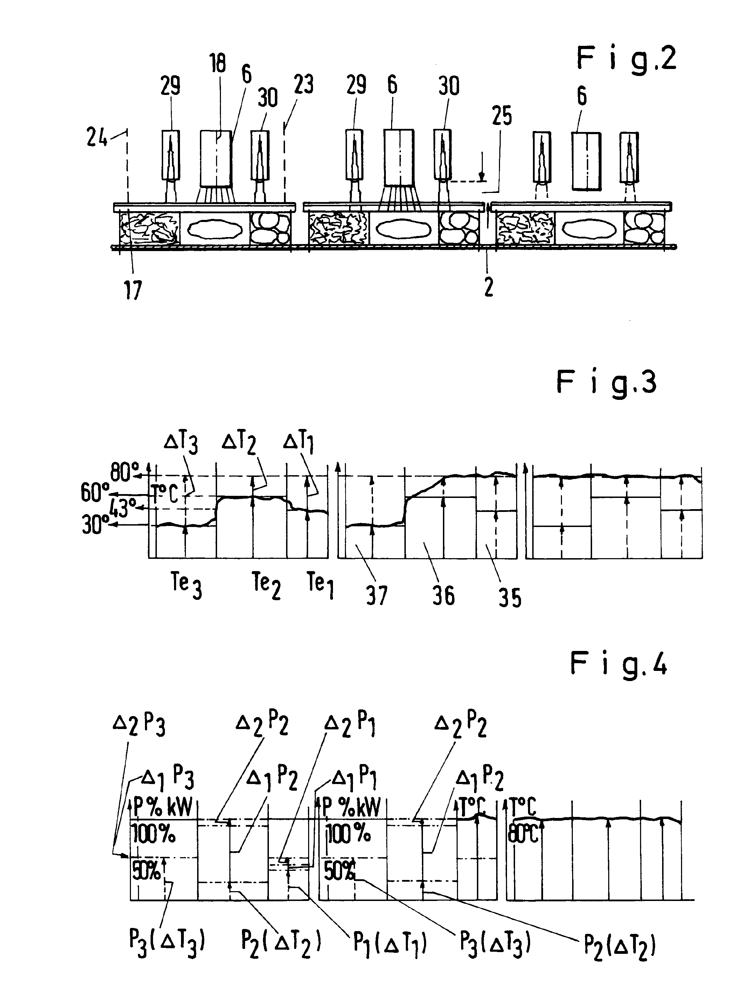

Zu diesem Zweck sind jeweils vor jedem unteren und doberen Mikrowelleneinspeisekanal 6, 7 Infrarotsensoren 29 (Fig. 2) angeordnet. Gegebenenfalls können auch hinter den Einspeisekanälen Sensoren 30 angeordnet sein, um die Temperatur nach erfolgter Mikrowellenauskoppelung in das jeweilige Produkt erneut zu messen und für Steuerungszwecke zur Verfügung zu haben.

In Fig. 3 wird ein Mikrowellenleistungsprofil aufgezeigt, welches zeitgleich unterhalb Fig. 2 gezeichnet ist und die Temperatur der jeweiligen Produkte in der Verpackung wiedergibt.

In einer in Fig. 2 gezeigten Verpackung 17 wurde ein Kartoffelanteil 35, ein Fleischanteil 36 und ein Gemüseanteil 37 eingegeben.

Bei der ersten Temperaturmessung dieser drei Produkte ergaben sich die in Fig. 3 gezeigten, exakt unterhalb der in Fig. 2 eingetragenen Werte, d.h.

Gemüse 37          30° C

Fleisch 36          60° C

Kartoffeln 35        43° C.

Aufgrund dieser von einem Temperatursensor erfaßten Werte ermittelte der Rechner folgende Leistungshöhe für den, dem Sensor in Arbeitsrichtung nachgeordneten Einspeisekanal, d.h. für die Steuerung der Abgabeleistung des an den Einspeisekanal angeschlossenen Generators.

Die Arbeitsweise des Rechners ist wie folgt:

Das vom Temperatursensor an den Rechner 12 gegebene Temperatursignal

Te-1 für die Kartoffeltemperatur

Te-2 für die Fleischtemperatur

Te-3 für die Gemüsetemperatur

wird zunächst mit der geforderten Ausgangstemperatur (T = 80° C) auf die Temperaturdifferenz verrechnet.

Das sich daraus ergebene delta-T-Signal (80° - 30° C für Gemüse) wird einem weiteren Rechenvorgang unterzogen, der die für das Gemüse spezifischen Parameter, wie

Protionsgewicht,

Dichte und

dielektrischen Werte

zur Bemessung der auszukoppelnden Mikrowellenleistung für diese Gemüseportion ausrechnet und an die Generatorsteuerung ausgibt. Die auszukoppelnde Mikrowellenleistungshöhe wird in Prozent der installierten Generatorleistung angegeben delta % P (Korrekturfaktor in Prozent von 1,2 kW).

Es ergibt sich somit für

die Kartoffeln für ein delta-T-1 eine Leistung P 1 von 60 % von 1,2 kW Generatorleistung,

das Fleisch für ein delta-T-2 eine Leistung P 2 von 100 % von 1,2 kW Generatorleistung,

das Gemüse für ein delta-T-3 eine Leistung P 3 von 50 % von 1,2 kW Generatorleistung.

Im mittlerer Teil in Fig. 3 wird die Temperaturerhöhung dargestellt, die sich nach erfolgter Mikrowelleneinkoppelung bis zur nächsten Leistungseinkoppelungsstelle unterhalb oder auch oberhalb eines Mikrowelleneinspeisekanals 6, 7 ergibt.

In Fig. 4 sind die delta-T-1 bis -3 Werte als umgerechnete Prozente der Generatorleistung angegeben, die zwecks Erreichung der Endbehandlungstemperatur erforderlich sind.

Es erfolgt in analoger Weise zu dem oben geschilderten Abtastvorgang die nächste Temperaturerfassung durch einen Temperatursensor, der vor, dem folgenden Einspeisekanal in einem bestimmten, vom Rechner berücksichtigten Abstand dazu angeordnet ist.

Die in dieser Phase einzukoppelnde Leistungshöhe ist (mittleren Teil von Fig. 3 und Fig. 4) bedeutend geringer. Die Endtemperatur des Kartoffelanteiles 35 ist bereits erreicht.

Lediglich die Temperatur des Fleischanteiles 36 (in geringerem Maß) sowie des Gemüseanteiles (in größerem Maß) ist noch zu erhöhen. Durch einen zusätzlichen Leistungsanteil, der die produktspezifischen Daten (Gewicht, Dichte, dielektrische Werte) berücksichtigt (delta-P 1 bis delta-P 3), wird die Endtemperatur in diesem Beispiel erreicht. In diesem Fall beträgt delta-P 3 Null Prozent, delta-P 2 10 Prozent und delta-P 1 auch 10 % (Prozent KW der Generatorleistung).

Durch eine erneute Temperaturabtastung und Ermittlung des ergänzenden delta-T-Wertes durch den Rechner sowie einer entsprechenden Steuerung der Generatorleistung, wird dann jeweils die Endtemperatur erhalten.

Die Endtemperatur kann in vielen Einzelschritten durch Einkoppelung einer jeweiligen Teilleistung oder auch in wenigen Schritten erreicht werden. Die Erreichung kann abhängig gemacht werden vom jeweiligen Produkt oder von der Produktzusammenstellung in den einzelnen Verpackungen oder offenen Behältern.

Da auf der anderen Seite auch das delta-T der einzelnen Produkte stark unterschiedlich ist, ist es vorteilhaft, auch eine Temperaturmessung in Arbeitsrichtung hinter einem Mikrowelleneinspeisekanal vorzunehmen, damit vom Rechner diese Werte in die Errechnung der nachfolgenden Leistungshöheneinspeisung mit einfließen können.

Beispiel:
‒ ‒ ‒ ‒ ‒ ‒ ‒

Nachfolgend wird ein Beispiel beschrieben, welches in Übereinstimmung mit der Lehre des ersten Patentanspruches durchgeführt wurde.

In die Lebensmittelverpackung aus einer tiefgezogenen und versiegelten Kunststoffolie wird ein vorgefertigtes Gericht aus Kartoffeln, Fleisch und Gemüse eingegeben, das einem Pasteurisiervorgang unterworfen werden soll, um Keime abzutöten zwecks Verlängerung der Verbrauchszeit bzw. der Haltbarkeit.

Die Packungen haben folgende Abmessungen:

Länge:         180 mm

Breite:         140 mm

Höhe:          40 mm

Gewicht:       350 g

Bei einer Eingangstemperatur

der Kartoffeln              von 43° C,

des Fleischstückes          von 60° C und

des Gemüseanteiles          von 30° C,

die von dem Sensor 29 erfaßt wurde, erfolgte eine Leistungeinkoppelung beim Durchlauf unterhalb des dem Sensor folgenden Einspeisekanals

von 40 % für den Kartoffelanteil $delta_1$-P 1,

von 90 % für den Fleischanteil $delta_1$-P 2 und

von 50 % für den Gemüseanteil $delta_1$-P 3.

Bei der erneuten Temperaturmessung durch den nächstfolgenden Sensor wurde eine Temperaturerhöhung

Kartoffelanteil        von 43° C auf 78 ° C,

Fleischanteil          von 60° C auf 75 ° C und

Gemüseanteil           von 30° C auf 80 ° C

festgestellt.

Aufgrund der neuen gemessenen Werte wurde vom Rechner für den

Kartoffelanteil               + 20 % (Generatorleistung), ($delta_2$-P 2)

Fleish- und Soßenanteil    + 10 % (Generatorleistung), (delta$_2$-P 3)

Gemüseanteil    + 0 % (Generatorleistung) (delta$_2$-P 1)

(gewünschte Gemüsetemperatur ist schon erreicht) in die Produkte an dem folgenden Einspeisekanal 6 eingekoppelt. Die nächste Temperaturmessung bestätigte, daß alle drei Produkte auf eine fast exakt gleiche Pasteurisiertemperatur gebracht wurden, ohne daß ein Produkt in der Verpackung durch eine zu hohe Temperatur einen Schaden erlitt bzw. die Packung platzte. Auch war die aufzuwendende Energiemenge insgesamt gesehen geringer.

Auf diese Weise können die Werte delta-P, die die produktspezifischen Daten berücksichtigen, automatisch erfaßt und im Prozeß verarbeitet werden (Regelkreise).

Wird ohne die zweite Infrarotsonde 30 gearbeitet, müssen die Faktoren, die das delta-P bestimmen, durch Einzelmessungen festgestellt und dem Rechner zur weiteren Verarbeitung manuell eingegeben werden.

Bezugszeichenliste

1 = Behandlungskammer

2 = Transportband

3 = Umlenkrollen

4 = Umlenkrollen

5 = Antrieb

6 = obere Einspeisekanäle

7 = untere Einspeisekanäle

8 = Generator, obere

9 = Generator, untere

10 = Leitung, oben

11 = Leitung, unten

12 = Rechner

13 = Leitung, Antrieb

15 = Registriereinrichtung (Reflexlichtschranke)

16 = Leitung

17 = Lebensmittelbehälter

17a = Behälter

17b = Behälteranfang

17c = Behälterende

18 = Öffnungsmitte (axialer Mittelpunkt des Einspeisekanals)

19 = Pfeil

23 = Anschaltpunkt

24 = Abschaltpunkt

25 = Einspeisekanalabstand

26 = Weggeber

29 = Infrarotmeßsonde

30 = Infrarotmeßsonde

35 = Kartoffeln

36 = Fleisch und Soße

37 = Gemüse

**Patentansprüche**

1. Arbeitsverfahren zum gleichmäßigen Erwärmen einzelner Produkte innerhalb eines Behälters mittels Mikrowellen, wobei die sich in offenen Behältern (17) oder in abgeschlossenen, mikrowellendurchlässigen Verpackungen befindenden, zu behandelnden Produkte durch eine längliche Mikrowellenbehandlungskammer (1) auf einem endlosen Transportband (2) geführt werden und wobei die Verpackungen mittels durch die Wandung einer Behandlungskammer (1) geführter Mikrowelleneinspeisekanäle (6, 7), an die Mikrowellengeneratoren (8, 9) angeschlossen sind, mit Mikrowellenstrahlung beaufschlagt werden, und wobei der Anfang (17b) und das Ende (17c) der Behälter (17) oder der Verpackungen vor oder beim Einlaufen in die Behandlungskammer (1) durch eine mit einem Weggeber (26) zusammenwirkende Reflexionslichtschranke registriert wird, und wobei die Position der Behälter (17) oder Verpackungen auf dem Transportband (2) für den An- und Abschaltvorgang der einzelnen Generatoren (8, 9) an einen Rechner (12) gegeben wird,

**dadurch gekennzeichnet,**

daß jeweils unmittelbar vor dem Passieren der einzelnen Behälter oder Verpackungen (17) unterhalb und/oder oberhalb der am produktseitigen Ende der Einspeisekanäle (6, 7) angeordneten Mikrowellenauskoppelungsöffnungen die Oberflächentemperatur der einzelnen in den Behältern oder Verpackungen (17) in Arbeitsrichtung hintereinander angeordneten Produkte (35, 36, 37) gemessen und an einen Rechner (12) gegeben wird, daß entsprechend der unterschiedlichen Temperaturen der einzelnen Produkte (35, 36, 37) vom Rechner aus der gemessenen Temperatur und den vorgegebenen spezifischen Produktparametern zwecks Erzielung einer gleichmäßigen Temperatur aller Produkte (35, 36, 37) in den einzelnen Behältern oder Verpackungen (17) ein Mikrowellenleistungsprofil erstellt wird, daß das Mikrowellenleistungsprofil für die einzelnen Produkte (35, 36, 37) in den Behältern oder der Verpakkungen (17) aufgrund der spezifischen Produktparameter, wie Eingangstemperatur, Portionsgewicht, Materialdichte und dielektrischer Wert vom Rechner (12) erstellt wird, und daß die, den jeweiligen Produkten (35, 36, 37) vom Rechner (12) zugeordnete Mikrowellenleistung in das jeweilige Produkt (35, 36, 37) in dem Behälter oder der Verpackung (17) beim Passieren unterhalb und/oder oberhalb der Mikrowellenauskoppelungsöffnungen (6, 7) eingekoppelt wird.

2. Vorrichtung zur Durchführung des Arbeitsverfahrens nach Anspruch 1 zum gleichmäßigen Erwärmen einzelner Produkte innerhalb eines Behälters mittels Mikrowellen, wobei die sich in offenen Behältern (17) oder in abgeschlossenen, mikrowellendurchlässigen Verpackungen befindenden, zu behandelnden Produkte durch eine längliche Mikrowellenbehandlungskammer (1) auf einem endlosen Transportband (2) geführt werden und wobei die Verpackungen mittels durch die Wandung einer Behandlungskammer (1) geführter Mikrowelleneinspeisekanäle (6, 7), an die Mikrowellengeneratoren (8, 9) angeschlossen sind, mit Mikrowellenstrahlung beaufschlagt werden, und wobei der Anfang (17b) und das Ende (17c) der Behälter (17) oder der Verpackungen vor oder beim Einlaufen in die Behandlungskammer (1) durch eine mit einem Weggeber (26) zusammenwirkende Reflexionslichtschranke registriert wird, und wobei die Position der Behälter (17) oder Verpackungen auf dem Transportband (2) für den An- und Abschaltvorgang der einzelnen Generatoren (8, 9) an einen Rechner (12) gegeben wird,

**dadurch gekennzeichnet,**

daß jeweils unmittelbar vor jedem von oben senkrecht in die Behandlungskammer ragenden Einspeisekanal (6, 7) die Temperatur der einzelnen Produkte (35, 36, 37) in den Behältern oder Verpackungen (17) erfassende Temperatursensoren (29) angeordnet sind, daß die Temperatursensoren (29) an einen mit den Produktparametern Materialdichte, dielektrischer Wert, Portionsgewicht und Ist- und Sollwert der Temperatur der einzelnen Produkte (35, 36, 37) in den Behältern oder Verpackungen (17) gespeisten Rechner (12) angeschlossen sind, und daß für eine Teilleistungsabgabe ausgebildete, mit dem Rechner (12) verbundene Mikrowellengeneratoren (8, 9) an die Einspeisekanäle (6, 7) angeschlossen sind.

3. Vorrichtung nach Anspruch 2,

**dadurch gekennzeichnet,**

daß in Arbeitsrichtung unmittelbar hinter den Mikrowelleneinspeisekanälen ein Temperatursensor (30) angeordnet ist.

4. Vorrichtung nach Anspruch 3,

**dadurch gekennzeichnet,**

daß der Abstand der am produktseitigen Ende der Einspeisekanäle (6, 7) angeordneten Mikrowellenauskopplungsöffnungen zur Produktoberfläche gleich der Wellenlänge oder kleiner als die Wellenlänge der eingesetzten Mikrowellenstrahlung ist.

## Claims

1. Method for the even heating of individual products within a container by means of microwaves, wherein the products to be treated, which are contained in open containers (17) or closed packages permeable to microwaves, are conducted on a continuous conveyor belt (2) through a rectangular microwave treatment chamber (1), wherein the packages are connected to the microwave generators (8, 9) by means of microwave input channels (6, 7), which extend through the wall of a treatment chamber (1), and are subjected to microwave radiation, wherein the leading ends (17b) and the trailing ends (17c) of the containers (17) or packages are detected before or during entry into the treatment chamber (1) by means of a reflection light barrier which co-operates with a motion pickup (26), and wherein the position of the containers (17) or packages on the conveyor belt (2) is transmitted to a computer (12) for the switching-on and switching-off of the individual generators (8, 9), characterised in that,

immediately before the individual containers or packages (17) pass beneath and/or above the respective microwave output openings provided at the end of the input channels (6, 7) adjacent the products, the surface temperature of the individual products (35, 36, 37), which are arranged one behind the other in the working direction, in the containers or packages (17), is measured and transmitted to a computer (12), in that, according to the various temperatures of the individual products (35, 36, 37), a microwave output profile is determined by the computer from the measured temperature and the prescribed specific product parameters for the purpose of achieving an even temperature for all of the products (35, 36, 37) in the individual containers or packages (17), in that the microwave output profile for the individual products (35, 36, 37) in the containers or packages (17) is determined by the computer (12) on the basis of the specific product parameters, such as input temperature, portion weight, material density and dielectric value, and in that the microwave output associated with the respective products (35, 36, 37) by the computer (12) is inputted into the respective product (35, 36, 37) in the container or package (17) as it passes beneath and/or above the microwave output openings (6, 7).

2. Apparatus for carrying out the method according to claim 1 for the even heating of individual products within a container by means of microwaves, wherein the products to be treated, which are contained in open containers (17) or closed packages permeable to microwaves, are conducted on a continuous conveyor belt (2) through a rectangular microwave treatment chamber (1), wherein the packages are connected to the microwave generators (8, 9) by means of microwave input channels (6, 7), which extend through the wall of a treatment chamber (1), and are subjected to microwave radiation, wherein the leading ends (17b) and the trailing ends (17c) of the containers (17) or packages are detected before or during entry into the treatment chamber (1) by means of a reflection light barrier which co-operates with a motion pickup (26), and wherein the position of the containers (17) or packages on the conveyor belt (2) is transmitted to a computer (12) for the switching-on and switching-off of the individual generators (8, 9), characterised in that

respective temperature sensors (29) are disposed immediately before each input channel (6, 7), which extends vertically from above into the treatment chamber, such sensors detecting the temperature of the individual products (35, 36, 37) in the containers or packages (17), in that the temperature sensors (29) are connected to a computer (12), which is fed with the product parameters, material density, dielectric value, portion weight and actual and desired values for the temperature of the individual products (35, 36, 37) in the containers or packages (17), and in that microwave generators (8, 9), which are provided in order to transmit partial outputs and are linked to the computer (12), are connected to the input channels (6, 7).

3. Apparatus according to claim 2, characterised in that

a temperature sensor (30) is arranged in the working direction immediately after the microwave input channels.

4. Apparatus according to claim 3, characterised in that

the spacing between the microwave output openings, which are provided at the end of the input channels (6, 7) adjacent the products, and the surface of the products is equal to or less than the wavelength of the microwave radiation employed.

**Revendications**

1. Mode opératoire de chauffage uniforme de produits individuels placés dans un récipient au moyen de micro-ondes, les produits à traiter, qui se trouvent dans des récipients ouverts (17) ou dans des emballages fermés, perméables aux micro-ondes, étant amenés à passer par une chambre allongée (1) de traitement aux micro-ondes sur un ruban transporteur sans fin (2) et les emballages étant balayés par une radiation de micro-ondes par des canaux (6, 7) de progagation des micro-ondes traversant la cloison d'une chambre de traitement (1) et auxquels des générateurs (8, 9) de micro-ondes sont raccordés et le début (17b) et la fin (17c) des récipients (17) ou des emballages étant repérés avant ou à l'entrée dans la chambre de traitement (1) par un barrage photoélectrique à réflexion coopérant avec un capteur de course (26) et la position des emballages (17) sur le ruban transporteur (2) étant transmise à un ordinateur (12) pour le processus de branchement ou de coupure des générateurs individuels (8, 9),

9

caractérisé en ce

qu'immédiatement avant le passage de chacun des récipients ou des emballages individuels (17) au-dessous et/ou au-dessus des orifices d'émission des micro-ondes disposés à l'extrémité côté produit des canaux de propagation (6, 7), la température superficielle des produits individuels (35, 36, 37) disposés les uns derrière les autres, dans le sens des opérations, dans les récipients ou emballages (17) est mesurée et transmise à un ordinateur (12), en ce que l'ordinateur établit un profil d'énergie des micro-ondes en fonction des différences des températures des produits individuels (35, 36, 37) et à partir de la température mesurée et des paramètres prescrits, spécifiques aux produits, en vue d'obtenir une température uniforme de tous les produits (35, 36, 37) dans les récipients ou emballages individuels (17), en ce que le profil de l'énergie des micro-ondes est établi par l'ordinateur (12) pour les produits individuels (35, 36, 37) se trouvant dans les récipients ou les emballages (17) sur la base des paramètres spécifiques aux produits, tels que la température d'entrée, le poids de la portion, la densité de la matière et la valeur diélectrique, et en ce que l'énergie des micro-ondes affectée par l'ordinateur (12) à chacun des produits (35, 36, 37) est envoyée sur le produit particulier (35, 36, 37) se trouvant dans le récipient ou l'emballage (17) lors de son passage sous et/ou sur les orifices (6, 7) d'émission des micro-ondes.

2. Dispositif pour la mise en oeuvre du mode opératoire selon la revendication 1, pour le chauffage uniforme de produits individuels placés à l'intérieur d'un récipient par micro-ondes, les produits à traiter qui se trouvent dans des récipients ouverts (17) ou dans des emballages fermés, perméables aux micro-ondes étant amenés à passer par une chambre allongée (1) de traitement aux micro-ondes sur un ruban transporteur sans fin (2) et les emballages étant balayés par une radiation de micro-ondes par des canaux (6, 7) de propagation des micro-ondes traversant la cloison d'une chambre de traitement (1) et auxquels des générateurs (8, 9) de micro-ondes sont raccordés et le début (17b) ainsi que la fin (17c) des récipients (17) ou des emballages étant repérés avant ou à l'entrée dans la chambre de traitement (1) par un barrage photoélectrique à réflexion coopérant avec un capteur de course (26) et la position des récipients (17) ou emballages sur le ruban transporteur (2) étant transmise à un ordinateur (12) pour le processus de branchement et de coupure des générateurs individuels (8, 9),

caractérisé en ce que

des capteurs de température (29) détectant la température des produits individuels (35, 36, 37) se trouvant dans les récipients ou emballages (17) sont disposés immédiatement devant chacun des canaux de propagation (6, 7) pénétrant verticalement par le haut dans la chambre de traitement, en ce que les capteurs de température (29) sont connectés à un ordinateur (12) dans lequel sont enregistrés les paramètres des produits : densité de la matière, valeur diélectrique, poids de la portion et valeur réelle ainsi que valeur de consigne de la température des produits individuels (35, 36, 37) se trouvant dans les récipients ou emballages (17), et en ce que des générateurs de micro-ondes (8, 9) conçus pour délivrer une puissance partielle et connectés à l'ordinateur (12) sont raccordés aux canaux (6, 7) de propagation.

3. Dispositif selon la revendication 2, caractérisé en ce qu'un capteur de température (30) est disposé immédiatement derrière les canaux de propagation des micro-ondes, dans le sens des opérations.

4. Dispositif selon la revendication 3, caractérisé en ce que la distance des orifices d'émission des micro-ondes, situés à l'extrémité côté produit des canaux (6, 7) de propagation, à la surface des produits est égale à la longueur d'onde ou inférieure à la longueur d'onde de la radiation utilisée des micro-ondes.

Fig.1

Fig.2

Fig.3

Fig.4